(19) Europäisches Patentamt
European Patent Office
Office européen des brevets

(11) **EP 4 729 479 A1**

(12) **EUROPEAN PATENT APPLICATION**
published in accordance with Art. 153(4) EPC

(43) Date of publication:
**22.04.2026 Bulletin 2026/17**

(21) Application number: **24823372.8**

(22) Date of filing: **11.06.2024**

(51) International Patent Classification (IPC):
***C01B 32/30*** *(2017.01)* ***C01B 32/318*** *(2017.01)*
***C01B 32/354*** *(2017.01)* ***H01G 11/42*** *(2013.01)*
***H01M 4/36*** *(2006.01)* ***H01M 4/62*** *(2006.01)*
***H01M 4/86*** *(2006.01)*

(52) Cooperative Patent Classification (CPC):
**C01B 32/30; C01B 32/318; C01B 32/354; H01G 11/42; H01M 4/36; H01M 4/62; H01M 4/86;** Y02E 60/10

(86) International application number:
**PCT/JP2024/021177**

(87) International publication number:
**WO 2024/257756 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023 JP 2023098631**

(71) Applicant: **Kuraray Co., Ltd.**
**Kurashiki-shi, Okayama 710-0801 (JP)**

(72) Inventors:
- **NISHITA, Yumika**
  **Bizen-shi, Okayama 705-0025 (JP)**
- **NISHINAMI, Hiroyuki**
  **Bizen-shi, Okayama 705-0025 (JP)**
- **NISHIMURA, Shushi**
  **Bizen-shi, Okayama 705-0025 (JP)**
- **TAGO, Shinya**
  **Osaka-shi, Osaka 530-8611 (JP)**

(74) Representative: **Müller-Boré & Partner Patentanwälte PartG mbB**
**Friedenheimer Brücke 21**
**80639 München (DE)**

(54) **ACTIVATED CARBON**

(57) The present invention relates to activated carbon having a specific surface area calculated by a BET method from a nitrogen adsorption/desorption isotherm of 1150 $m^2/g$ to 2200 $m^2/g$, an adsorption amount of vitamin B12 when the activated carbon is brought into contact with a 300 ppm aqueous vitamin B12 solution for 24 hours of 10.2 mg/mL to 50 mg/mL, and a content of chlorine of 2500 ppm or less.

*Fig. 1*

1
30mm
30mm

EP 4 729 479 A1

## Description

TECHNICAL FIELD

The present invention relates to activated carbon for a power storage device.

BACKGROUND ART

In recent years, various power storage devices such as aqueous electrolyte batteries such as a lead-carbon battery, nonaqueous electrolyte batteries such as lithium ion batteries, lithium-sulfur batteries, and sodium ion batteries, all-solid-state batteries, electric double layer capacitors, and fuel cells have been developed, and carbonaceous materials for improving performance according to applications are required.
For example, lithium-sulfur batteries have been actively researched and developed since they can achieve a much larger discharge capacity than lithium ion secondary batteries. Since sulfur does not have electron conductivity, a method of combining sulfur with activated carbon or the like has been proposed. For example, Patent Document 1 describes porous carbon in which sulfur is filled in pores.
In addition, for example, an electric double layer capacitor, which is one of energy storage devices, utilizes a capacity (electric double layer capacity) derived only from physical ion adsorption/desorption without involving any chemical reaction, and therefore has superior output characteristics and lifetime characteristics as compared to batteries. Such an electric double layer capacitor is required to be further improved in electrostatic capacitance, durability and the like, and various methods have been proposed for improving these characteristics.
For example, Patent Document 2 discloses that when activated carbon derived from soft carbon having a specific surface area, a particle size, and a surface functional group amount in specific ranges is used for an electric double layer capacitor, output and durability are imparted while the electrostatic capacitance of the electric double layer capacitor is maintained.
In addition, Patent Document 3 discloses that when activated carbon with which the ratio of the D peak height to the G peak height of the Raman spectrum and the specific surface area are in specific ranges is used for an electric double layer capacitor, the electric capacity per electrode can be increased.

PRIOR ART DOCUMENT

PATENT DOCUMENTS

Patent Document 1: JP-A-2013-118191
Patent Document 2: WO 2015/146459 A
Patent Document 3: JP-A-2012-92013

SUMMARY OF THE INVENTION

PROBLEMS TO BE SOLVED BY THE INVENTION

In Patent Document 1, sulfur is filled in pores of porous carbon to facilitate transfer of electrons, thereby increasing the capacity. However, when the filling rate of sulfur is increased in order to increase the capacity, pores are blocked, and an electrolyte is less likely to diffuse, so that the resistance of a power storage device may be increased.
In Patent Documents 2 and 3, the electrostatic capacitance of a power storage device is improved by adjusting parameters such as the aforementioned specific surface area. However, there is a limit to the improvement of the power storage device in electrostatic capacitance by adjusting those parameters. Further, Patent Documents 2 and 3 do not disclose at all that the resistance of a power storage device is reduced by adjusting parameters of activated carbon.
Therefore, an object of the present invention is to provide activated carbon for a power storage device useful for improving the performance of the power storage device.

SOLUTIONS TO THE PROBLEMS

As a result of intensive studies to solve the above problems, the present inventors have found that the above problems can be solved by appropriately adjusting the volume of pores expressed by the adsorption amount of vitamin B12, and have accomplished the present invention. That is, the present invention encompasses the following preferred embodiments.

[1] Activated carbon having a specific surface area calculated by a BET method from a nitrogen adsorption/desorption isotherm of 1150 $m^2/g$ to 2200 $m^2/g$, an adsorption amount of vitamin B12 when the activated carbon is brought into contact with a 300 ppm aqueous vitamin B12 solution for 24 hours of 10.2 mg/mL to 50 mg/mL, and a content of chlorine of 2500 ppm or less.
[2] The activated carbon according to [1], wherein a value of D/G, which is an intensity ratio of a D band peak in the vicinity of 1360 $cm^{-1}$ to a G band peak in the vicinity of 1580 $cm^{-1}$ in Raman spectroscopic analysis, is 1.15 to 1.40.
[3] The activated carbon according to [1] or [2], wherein a ratio of an adsorption amount provided by contact with a 300 ppm aqueous vitamin B12 solution for 2 hours to an adsorption amount provided by contact with the aqueous solution for 24 hours is 58% or more.
[4] The activated carbon according to any one of [1] to [3], wherein a ratio of an adsorption amount of vitamin B12 when the activated carbon is brought into contact with a 300 ppm aqueous vitamin B12 solution for 24 hours to a specific surface area calculated by a BET method from a nitrogen adsorption/desorption isotherm is 0.00810 [(mg/mL)/($m^2$/g)] to 0.02470 [(mg/mL)/($m^2$/g)].
[5] An electrode material comprising the activated carbon according to any one of [1] to [4].
[6] An electrode comprising the electrode material according to [5].
[7] A power storage device comprising the electrode according to [6].

EFFECTS OF THE INVENTION

According to the present invention, it is possible to provide activated carbon for a power storage device useful for improving the performance of the power storage device.

BRIEF DESCRIPTION OF THE DRAWINGS

[Fig. 1] Fig. 1 is a view illustrating a sheet-shaped electrode composition.
[Fig. 2] Fig. 2 is a view illustrating a current collector (etched aluminum foil) with a conductive adhesive applied thereto.
[Fig. 3] Fig. 3 is a view illustrating a polarizable electrode formed by bonding the sheet-shaped electrode composition and the current collector and ultrasonically welding an aluminum tab.
[Fig. 4] Fig. 4 is a view illustrating a bag-shaped exterior sheet.
[Fig. 5] Fig. 5 is a view illustrating an electric double layer capacitor.

DESCRIPTION OF EMBODIMENTS

Hereinafter, embodiments of the present invention will be described in detail. It is noted that the following is a description that exemplifies embodiments of the present invention, and the present invention is not intended to be limited to the following embodiments.

<Activated carbon>

The activated carbon of the present invention has a specific surface area calculated by a BET method from a nitrogen adsorption/desorption isotherm of 1150 $m^2/g$ to 2200 $m^2/g$, an adsorption amount of vitamin B12 when the activated carbon is brought into contact with a 300 ppm aqueous vitamin B12 solution for 24 hours of 10.2 mg/mL to 50 mg/mL, and a content of chlorine of 2500 ppm or less.

The present inventors studied a method for improving the performance of a power storage device such as a nonaqueous electrolyte battery or an electric double layer capacitor. The present inventors have paid attention to the facts that in the conventional technique, attention is paid only to micropores to which an adsorbate such as an electrolyte is finally adsorbed and mesopores corresponding to an inlet at the time when the adsorbate is adsorbed into activated carbon, that the specific surface area, mesopore volume, macropore volume, and the like of a carbonaceous material such as activated carbon are appropriately adjusted to improve the characteristics of a power storage device, and that pores at the time when the adsorbate moves from the mesopores to the micropores have not been considered. That is, the present inventors have found that by appropriately adjusting the volume of the pores corresponding to the size of the path through which the adsorbate diffuses in the activated carbon before the adsorbate having entered from the mesopores is adsorbed by the micropores, the adsorbate can move smoothly and the resistance can be reduced. It has also been found by the present inventors that the volume of pores corresponding to the path of the adsorbate is expressed by the adsorption amount of vitamin B12. Therefore, according to the present invention, it is possible to provide activated carbon useful particularly for reducing the resistance of a power storage device. Furthermore, in the case of having used the activated carbon of the present invention for an electric double layer capacitor, the electrolyte has been adsorbed to micropores without clogging in the path during diffusion, and as a result, it has become possible to improve the electrostatic capacitance. Therefore, in the present description, when the power storage device is an electric double layer capacitor, the performance thereof includes, for example, resistance and electrostatic capacitance, and improving or increasing the performance of the electric double layer capacitor means, for example, decreasing the resistance and increasing the electrostatic capacitance. In addition, in the present description, when the power storage device is a nonaqueous electrolyte battery, the performance thereof can include, for example, resistance and discharge capacity.

Examples of the electrolyte that can be used for the power storage device include $LiPF_6$, $LiBF_4$, LiTFSI (lithium bis(trifluoromethanesulfonyl)imide), and LiFSI (lithium bis(fluorosulfonyl)imide) in the case of a lithium-sulfur battery, and tetraethylammonium salts such as $TEABF_4$ (tetraethylammonium tetrafluoroborate) and $TEAPF_6$ (tetraethylammonium hexafluorophosphate); triethylmethylammonium salts such as $TEMABF_4$ (triethylmethylammonium tetrafluoroborate); tetraethylphosphonium salts such as $TEPBF_4$ (tetraethylphosphonium tetrafluoroborate); ionic liquid $EMIBF_4$ (1-ethyl-3-methylimidazolium tetrafluoroborate); tetramethylammonium salts; diethyldimethylammonium salts; ethyltrimethylammonium salts; tetrapropylammonium salts; tetrabutylammonium salts; tributylmethylammonium salts; tetramethylphosphonium salts; tetraethylphosphonium salts; tetrapropylphosphonium salts; and tetrabutylphosphonium salts in the case of an electric double layer capacitor.

[Specific surface area]

The activated carbon of the present invention has a specific surface area calculated by a BET method from a nitrogen adsorption/desorption isotherm (hereinafter also referred to as "BET specific surface area") of 1150 $m^2$/g to 2200 $m^2$/g. When the BET specific surface area is 1150 $m^2$/g to 2200 $m^2$/g, the electrostatic capacitance or discharge capacity of a power storage device containing the activated carbon of the present invention is likely to be high, and the resistance is likely to be low. If the BET specific surface area is less than 1150 $m^2$/g, the average pore size is relatively small, and the electrolyte is less likely to diffuse in pores during charging and discharging, so that the resistance tends to increase. In addition, the durability of the power storage device containing the activated carbon of the present invention tends to decrease as the resistance increases. On the other hand, if the BET specific surface area exceeds 2200 $m^2$/g, the bulk density of the activated carbon decreases, and the electrostatic capacitance or discharge capacity per unit volume tends to decrease. The BET specific surface area is preferably 1200 $m^2$/g to 2180 $m^2$/g, 1250 $m^2$/g to 2160 $m^2$/g, 1300 $m^2$/g to 2140 $m^2$/g, 1350 $m^2$/g to 2120 $m^2$/g, or 1400 $m^2$/g to 2100 $m^2$/g. The BET specific surface area is also preferably 1400 $m^2$/g to 2200 $m^2$/g, more preferably 1500 $m^2$/g to 2100 $m^2$/g, even more preferably 1550 $m^2$/g to 2000 $m^2$/g, still even more preferably 1600 $m^2$/g to 1950 $m^2$/g, particularly preferably 1650 $m^2$/g to 1900 $m^2$/g, and particularly more preferably 1750 $m^2$/g to 1900 $m^2$/g. When the BET specific surface area is not less than the lower limit value and not more than the upper limit value, the electrostatic capacitance or the discharge capacity of the power storage device containing the activated carbon of the present invention is likely to be higher, and the resistance is likely to be lower. The BET specific surface area can be adjusted to fall within the above range, for example, by appropriately adjusting the type of the raw material of the activated carbon; the temperature and/or the atmosphere and/or the time in the activation step; the number of the activation step; the temperature and/or the atmosphere and/or the time in the heat treatment step during the production of the activated carbon, and the like. The BET specific surface area can be determined, for example, by the method described in Examples described later.

[Adsorption amount of vitamin B12]

The activated carbon of the present invention has an adsorption amount of vitamin B12 when the activated carbon is brought into contact with a 300 ppm aqueous vitamin B12 solution for 24 hours (hereinafter sometimes simply referred to as "adsorption amount of vitamin B12") of 10.2 mg/mL to 50 mg/mL. When the adsorption amount of vitamin B12 is 10.2 mg/mL or more, the electrostatic capacitance or discharge capacity of a power storage device containing the activated carbon of the present invention is likely to be high, and the resistance is likely to be low. As described above, the adsorption amount of vitamin B12 represents the volume of pores corresponding to the size of the path through which an electrolyte diffuses in the activated carbon. Therefore, if the adsorption amount of vitamin B12 is less than 10.2 mg/mL, the volume of pores that can serve as a diffusion path of an electrolyte is reduced, so that the electrolyte is less likely to diffuse in the pores during charging and discharging, and resistance tends to increase. In addition, the durability of the power storage device containing the activated carbon of the present invention tends to decrease as the resistance increases. If the adsorption amount of vitamin B12 exceeds 50 mg/mL, the volume of pores increases, and thus the electrostatic capacitance or discharge capacity per unit volume tends to decrease. The adsorption amount of vitamin B12 is preferably 10.5 mg/mL to 50 mg/mL, 10.8 mg/mL to 50 mg/mL, 11.0 mg/mL to 50 mg/mL, 11.5 mg/mL to 50 mg/mL, or 12.0 mg/mL to 50 mg/mL, more preferably 13 mg/mL to 50 mg/mL, even more preferably 15 mg/mL to 40 mg/mL, still even more preferably 21 mg/mL to 30 mg/mL, and particularly preferably 24 mg/mL to 28 mg/mL. When the adsorption amount of vitamin B12 is not less than the lower limit value and not more than the upper limit value, the electrostatic capacitance or the discharge capacity of a power storage device containing the activated carbon of the present invention is likely to be higher, and the resistance is likely to be low. The adsorption amount of vitamin B12 can be adjusted to fall within the above range, for example, by appropriately adjusting the temperature and/or the atmosphere and/or the time of the activation step; the number of the activation step; the temperature and/or the atmosphere and/or the time of the heat treatment step during the production of the activated carbon, and the like. The adsorption amount of vitamin B12 can be determined, for example, by the method described in Examples described later.

In the activated carbon of the present invention, the ratio of the adsorption amount provided by contact with a 300 ppm aqueous vitamin B12 solution for 2 hours to the adsorption amount provided by contact with the aqueous solution for 24 hours (adsorption amount provided by contact with aqueous vitamin B12 solution for 2 hours/adsorption amount provided by contact with aqueous vitamin B12 solution for 24 hours $\times$ 100) is preferably 58% or more, more preferably 60% or more, even more preferably 62% or more, still even more preferably 65% or more, particularly preferably 70% or more, and particularly more preferably 76% or more. When the ratio of the adsorption amount provided by contact with vitamin B12 for 2 hours to the adsorption amount provided by contact with vitamin B12 for 24 hours is equal to or more than the above lower limit value, the adsorption and desorption of an electrolyte in the pores are fast during charging and discharging, and the electrolyte is more likely to diffuse, so that the activated carbon is superior in rate characteristics and the resistance is likely to be lower. From the viewpoint of the balance between the adsorption rate and the desorption rate, that ratio is preferably 90% or less, more preferably 85% or less, and even more preferably 82% or less. In addition, that ratio is preferably 58% to 90%, more preferably 60 to 85%, and 65 to 82%, 70 to 82%, and 76 to 82% are also preferred embodiments. That ratio can be adjusted to fall within the above range, for example, by appropriately adjusting the temperature and/or the atmosphere and/or the time of the activation step; the number of the activation step; the temperature and/or the atmosphere and/or the time of the heat treatment step during the production of the activated carbon, and the like.

The activated carbon of the present invention has a ratio of an adsorption amount of vitamin B12 when the activated carbon is brought into contact with a 300 ppm aqueous vitamin B12 solution for 24 hours to a BET specific surface area [(the adsorption amount of vitamin B12 when the activated carbon is brought into contact with a 300 ppm aqueous vitamin B12 solution for 24 hours)/(the BET specific surface area)] of preferably 0.00810 (mg/mL)/($m^2$/g) to 0.02470 (mg/mL)/($m^2$/g), more preferably 0.00820 (mg/mL)/($m^2$/g) to 0.02440 (mg/mL)/($m^2$/g), even more preferably 0.00830 (mg/mL)/($m^2$/g) to 0.02410 (mg/mL)/($m^2$/g), still even more preferably 0.00840 (mg/mL)/($m^2$/g) to 0.02380 (mg/mL)/($m^2$/g), further preferably 0.00850 (mg/mL)/($m^2$/g) to 0.02350 (mg/mL)/($m^2$/g), particularly preferably 0.00860 (mg/mL)/($m^2$/g) to 0.02320 (mg/mL)/($m^2$/g). When the ratio of the adsorption amount of vitamin B12 to the BET specific surface area is not less than the above lower limit value and not more than the above upper limit value, the electrostatic capacitance or discharge capacity of a power storage device containing the activated carbon of the present invention is likely to be higher, and the resistance is likely to be lower.

[Content of chlorine]

The activated carbon of the present invention has a content of chlorine of 2500 ppm or less. When the content of chlorine is 2500 ppm or less, the electrostatic capacitance or discharge capacity of a power storage device containing the activated carbon of the present invention is likely to be high, and the resistance is likely to be low. If the content of chlorine is more than 2500 ppm, an SEI film is formed through the generation of chloride, and pores are closed, so that electrostatic capacitance or discharge capacity is reduced, resistance is increased, and durability is reduced. The content of chlorine is preferably 1000 ppm or less, more preferably 400 ppm or less, even more preferably 100 ppm or less, still even more preferably 50 ppm or less, particularly preferably 35 ppm or less, and extremely preferably 30 ppm or less. When the content of chlorine is equal to or less than the above upper limit value, the resistance is likely to be lower. The content of chlorine, which is an impurity, is preferably as low as possible, and the lower limit of the content of chlorine may be 0 ppm, and the content of chlorine is preferably 1 ppm or more. In addition, the contents of chlorine of 0 to 2500 ppm, 0 to 1000 ppm, 1 to 400 ppm, 1 to 100 ppm, 1 to 50 ppm, 1 to 35 ppm, 1 to 30 ppm, 1 to 10 ppm, and 1 to 5 ppm are also preferred embodiments. The content of chlorine can be adjusted to fall within the above range, for example, by appropriately adjusting the type of the raw material of the activated carbon; the type of the acid and/or the concentration of the acid and/or the time of the washing step; the temperature and/or the atmosphere and/or the time of the heat treatment step during the production of the activated carbon, and the like. The content of chlorine can be determined by fluorescent X-ray analysis, and can be determined, for example, by the method described in Examples described later.

In one preferred embodiment of the present invention, the activated carbon has a specific surface area calculated by a BET method from a nitrogen adsorption/desorption isotherm of 1150 $m^2$/g to 2200 $m^2$/g (preferably 1400 $m^2$/g to 2200 $m^2$/g), an adsorption amount of vitamin B12 when the activated carbon is brought into contact with a 300 ppm aqueous vitamin B12 solution for 24 hours of 13 mg/mL to 50 mg/mL, and a content of chlorine of 2500 ppm or less.

In another preferred embodiment of the present invention, the activated carbon has a specific surface area calculated by the BET method from a nitrogen adsorption/desorption isotherm of 1150 $m^2/g$ to 2200 $m^2/g$ (preferably 1400 $m^2/g$ to 2200 $m^2/g$), an adsorption amount of vitamin B12 when the activated carbon is brought into contact with a 300 ppm aqueous vitamin B12 solution for 24 hours of 10.2 mg/mL to 50 mg/mL, a ratio of the adsorption amount of vitamin B12 when the activated carbon is brought into contact with a 300 ppm aqueous vitamin B12 solution for 24 hours to the specific surface area calculated by the BET method from a nitrogen adsorption/desorption isotherm of 0.00810 [(mg/mL)/($m^2$/g)] to 0.02470 [(mg/mL)/($m^2$/g)], and a content of chlorine of 2500 ppm or less.

When the power storage device includes the activated carbon of one of these preferred embodiments, a higher electrostatic capacitance or discharge capacity can be obtained, and a lower resistance can be obtained.

[Ratio of D band peak to G band peak]

The value of D/G, which is the intensity ratio of the D band peak in the vicinity of 1360 $cm^{-1}$ to the G band peak in the vicinity of 1580 $cm^{-1}$ in the Raman spectroscopic analysis of the activated carbon of the present invention, is preferably 1.15 to 1.40, more preferably 1.19 to 1.39, and even more preferably 1.21 to 1.35, or 1.21 to 1.32. The D band peak is a peak caused by disturbance and defects of the graphite structure, and the G band peak is a peak derived from the graphite structure. The D band peak in the vicinity of 1360 $cm^{-1}$ is usually observed in the range of 1300 $cm^{-1}$ to 1375 $cm^{-1}$, preferably 1330 $cm^{-1}$ to 1370 $cm^{-1}$. The G band peak in the vicinity of 1580 $cm^{-1}$ is usually observed in the range of 1560 $cm^{-1}$ to 1615 $cm^{-1}$, preferably 1565 $cm^{-1}$ to 1610 $cm^{-1}$. The value of D/G is related to the crystallinity of activated carbon, and when the value of D/G is equal to or more than the lower limit value, the crystallinity is not excessively low, so that the activated carbon does not contain an excessively large amount of amorphous solids, and the resistance of the electric device containing the activated carbon of the present invention is likely to be low. When the value of D/G is equal to or less than the above upper limit value, the crystallinity of the activated carbon is not excessively high, so that a decrease in carbon edge due to development of the graphite structure hardly occurs, and a decrease in coordination sites of an electrolyte hardly occurs. Therefore, the electric device including the activated carbon of the present invention is likely to have low resistance particularly at a low temperature. The value of D/G can be adjusted to fall within the above range, for example, by appropriately adjusting the temperature and/or the atmosphere and/or the time of the activation step; the number of the activation step; the temperature and/or the time and/or the atmosphere of the heat treatment step during the production of the activated carbon, and the like. The value of D/G can be determined, for example, by the method described in Examples described later.

In one preferred embodiment of the activated carbon of the present invention, when the specific surface area is 1150 $m^2/g$ to 2200 $m^2/g$, it is considered that micropores to which an electrolyte is to be adsorbed are relatively developed, and when the activated carbon is used for a power storage device, the electrostatic capacitance or discharge capacity is likely to be higher. In addition to the above, if micropores have been developed, an increased adsorption rate is attained, so that activated carbon superior also in adsorption performance tends to be obtained. This means that the activated carbon of one preferred embodiment of the present invention is not only suitable for a power storage device but also can be useful as an adsorbent. In such activated carbon, the adsorption amount of chloroform is preferably 0.35 mg/g or more, more preferably 0.40 mg/g or more, even more preferably 0.45 mg/g or more, and still even more preferably 0.48 mg/g or more. The larger the adsorption amount of chloroform is, it is meant that the better in adsorption performance the activated carbon is. Therefore, the upper limit of the adsorption amount is not particularly limited, but it is usually 5 mg/g or less. The adsorption amount of chloroform can be adjusted to fall within the above range, for example, by appropriately adjusting the temperature and/or the atmosphere and/or the time of the activation step; the number of the activation step; the temperature and/or the time and/or the atmosphere of the heat treatment step during the production of the activated carbon, and the like. The adsorption amount of chloroform can be determined, for example, by the method described in Examples described later.

<Method for producing activated carbon>

The activated carbon of the present invention can be produced, for example, by a method involving obtaining activated carbon by carbonizing, activating, washing, and heat-treating a plant-derived carbon precursor.

In one embodiment of a method for producing the activated carbon of the present invention, a plant-derived carbon precursor is first carbonized. The plant as a raw material of the plant-derived carbon precursor is not particularly limited, and examples thereof include coconut shells, coffee beans, tea leaves, sugar cane, fruits (e.g., mikan orange and banana), straw, broadleaf trees, coniferous trees, bamboo, and rice husks. These plants may be used singly or two or more of them may be used in combination; coconut shells are preferred because they are available in a large quantity and are commercially advantageous. The coconut as a raw material of the coconut shells is not particularly limited, and examples thereof include palm (oil palm), coconut palm, salak, and double coconut. In the present invention, the plant-derived carbon precursor can be obtained in the form of a char (for example, coconut shell char) by temporarily calcining those plants. Char generally refers to a carbon-rich powdery solid that is produced without melting and softening when coal is heated, but herein, the char also refers to a powdery carbon-rich solid that is produced without melting and softening by heating an organic substance.

A method for producing char from a plant is not particularly limited, but for example, the char is produced by calcining (carbonizing) a plant raw material at a temperature of 300°C or more, for example, about 400 to about 800°C under an atmosphere of an inert gas such as nitrogen, carbon dioxide, helium, argon, carbon monoxide or a fuel exhaust gas, a mixed gas of these inert gases, or a mixed gas of any of the above inert gases as a main component and another gas.

The carbon precursor preferably has a BET specific surface area of 100 to 800 $m^2$/g, more preferably 200 to 700 $m^2$/g, and even more preferably 300 to 600 $m^2$/g. When the BET specific surface area of the carbon precursor is within the above range, adjustment to a desired pore structure is easy.

After the carbonization of the carbon precursor, primary activation is performed. The activation method is not particularly limited, and may be selected according to a desired contact ratio of the carbon precursor with the reaction gas described later. When the contact ratio of the carbon precursor with the reaction gas is made high (for example, about 70 to about 100%), for example, a batch type vertical flow activation furnace may be used. When the contact ratio of the carbon precursor with the reaction gas is made low (for example, about 10 to about 50%), for example, a continuous horizontal rotary kiln may be used.

From the viewpoint of making it easy to increase the electrostatic capacitance or discharge capacity of a power storage device containing the activated carbon of the present invention and easy to decrease the resistance, it is preferable to use a mixed gas of an inert gas and water vapor in the primary activation. The partial pressure of water vapor at that time is usually 10 to 60%, preferably 20 to 55%, and more preferably 30 to 50%. When the partial pressure of water vapor is within the above range, activation easily proceeds sufficiently, and a rapid activation reaction is easily suppressed.

To make it easy to increase the electrostatic capacitance or discharge capacity of a power storage device containing the activated carbon of the present invention and easy to decrease the resistance, it is preferable to feed the mixed gas such that the amount of the contact reaction gas per the carbon precursor, which is determined by the following equation, is 0.1 to 10.0 mL/min/kg. When activation after the secondary activation described later is not performed, it is sometimes preferable to feed the contact reaction gas per the carbon precursor at a rate of 3.0 to 10.0 mL/min/kg.

Amount of contact reaction gas per carbon precursor [mL/min/kg] = temperature-corrected amount of reaction gas [mL/min]/amount of carbon precursor [kg] $\times$ contact ratio [%]/100 [Math. 1]

Temperature-corrected amount of reaction gas [mL/min] = amount of reaction gas [mL/min] $\times$ (273 + activation temperature [°C])/273 [Math. 2]

When the amount of the contact reaction gas per the carbon precursor is within the above range, pores having a size expressed by the adsorption amount of vitamin B12 are likely to develop, the electrostatic capacitance or discharge capacity of a power storage device containing the activated carbon of the present invention is likely to be high, and the resistance is likely to be low.

From the viewpoint of appropriately developing pores having a size expressed by the adsorption amount of vitamin B12, the contact ratio of the carbon precursor with the reaction gas is preferably 15% or more. Incidentally, the contact ratio of the carbon precursor with the reaction gas is 100% in the case of a vertical furnace because the reaction gas uniformly flows from the furnace bed to the upper portion, and can be determined by the ratio of the volume of the carbon precursor to the volume of the furnace in the case of a horizontal furnace.

The activation temperature in the primary activation is usually 700 to 1100°C, and preferably 800 to 1000°C. The activation time and the temperature raising rate are not particularly limited, and can be appropriately adjusted according to the type, shape, size, and the like of the plant-derived carbon precursor to be selected.

The primary activation is preferably performed until the BET specific surface area of the primarily-activated activated carbon, which is obtained after the primary activation, reaches about 1000 to about 2000 $m^2$/g.

Next, the primarily-activated activated carbon is washed. The washing can be performed by immersing the primarily-activated activated carbon in a washing liquid containing an acid. Examples of the washing liquid include mineral acids and organic acids. Examples of the mineral acids include hydrochloric acid and sulfuric acid. Examples of the organic acids include saturated carboxylic acids such as formic acid, acetic acid, propionic acid, oxalic acid, tartaric acid, and citric acid, and aromatic carboxylic acids such as benzoic acid and terephthalic acid. The acid to be used for the washing liquid is preferably a mineral acid, and more preferably hydrochloric acid from the viewpoint of a washing property. After washing with an acid, it is preferable to remove excess acid by washing with water or the like. This operation can reduce the load on the activation facilities on and after the secondary activation.

The washing liquid can be usually prepared by mixing an acid and an aqueous solution. Examples of the aqueous solution include water and a mixture of water and a water-soluble organic solvent. Examples of the water-soluble organic solvent include alcohols such as methanol, ethanol, propylene glycol, and ethylene glycol.

The concentration of the acid in the washing liquid is not particularly limited, and the washing liquid may be used with appropriate adjustment of the concentration of the acid according to the type of acid to be used. The acid concentration of the washing liquid is preferably 0.1 to 2.0 N, more preferably 0.2 to 1.5 N, and even more preferably 0.3 to 1.0 N. The fact that the concentration of the acid in the washing liquid is within the above range is preferable because impurities contained in the primarily-activated activated carbon can be efficiently removed.

The pH of the washing liquid is not particularly limited, and may be appropriately adjusted according to the type of the acid to be used, the object to be removed, and the like.

The temperature of the washing liquid at the time of immersing the primarily-activated activated carbon is not particularly limited, but is preferably 0 to 98°C, more preferably 10 to 95°C, and even more preferably 15 to 90°C. The fact that the temperature of the washing liquid at the time of immersing the primarily-activated activated carbon is within the above range is preferable because the washing can be performed for a practical time and with the load on the apparatus controlled.

The method of washing the primarily-activated activated carbon is not particularly limited as long as the primarily-activated activated carbon can be immersed in the washing liquid, and the method may be one in which the washing liquid is continuously added and retained for a prescribed time and immersion is performed while extracting the washing liquid, or one in which the primarily-activated activated carbon is immersed and retained in the washing liquid for a prescribed time and, after removing the washing liquid, fresh washing liquid is added and this immersion-liquid removal operation is repeated. Further, the method may be one in which the whole washing liquid is renewed, or one in which the washing liquid is partially renewed. The time for which the primarily-activated activated carbon is immersed in the washing liquid can be appropriately adjusted according to the acid to be used, the concentration of the acid, the treatment temperature, and the like.

The washing time is not particularly limited, but is preferably 0.05 to 4 hours, and more preferably 0.1 to 3 hours from the viewpoint of the economic efficiency of the reaction facilities and the structural retention of the activated carbon.

The mass ratio of the washing liquid to the primarily-activated activated carbon when the primarily-activated activated carbon is immersed in the washing liquid may be appropriately adjusted according to the type, concentration, temperature, and the like of the washing liquid to be used. The mass of the primarily-activated activated carbon to be immersed to the mass of the washing liquid is usually 0.1 to 50% by mass, preferably 1 to 20% by mass, and more preferably 1.5 to 10% by mass. Within the above range, impurities eluted into the washing liquid are less likely to precipitate out of the washing liquid and re-adhesion of the impurities to the primarily-activated activated carbon is thus likely to be inhibited.

The atmosphere in which the washing is performed is not particularly limited, and may be appropriately selected according to the method to be used for washing, but usually, the washing is performed in an air atmosphere.

The washing may be performed once or a plurality of times with one washing liquid, or may be performed a plurality of times by combining two or more washing liquids.

The impurities that can be contained in the activated carbon can be removed by washing. The impurities originate from a plant-derived carbon precursor, and examples thereof include alkali metals, such as lithium, sodium, and potassium; alkaline earth metals, such as beryllium, magnesium, and calcium; and transition metals, such as iron, copper, and nickel.

After the washing, the primarily-activated activated carbon may be dried. Drying is an operation for removing moisture and the like adsorbed on the primarily-activated activated carbon, and for example, moisture and the like adsorbed on the primarily-activated activated carbon can be removed by heating the primarily-activated activated carbon. By performing drying by means such as reduced pressure, reduced pressure heating, or freezing in addition to or instead of heating, moisture and the like adsorbed on the primarily-activated activated carbon can be removed.

The drying temperature is preferably 100 to 330°C, more preferably 110 to 300°C, and even more preferably 120 to 250°C from the viewpoint of removing moisture adsorbed on the primarily-activated activated carbon.

The drying time depends on the drying temperature to be employed, but is preferably 0.1 hours or more, more preferably 0.5 hours or more, and even more preferably 1 hour or more from the viewpoint of removing the moisture adsorbed on the primarily-activated activated carbon. From the viewpoint of economic efficiency, it is preferably 24 hours or less, more preferably 12 hours or less, and even more preferably 6 hours or less.

The drying may be performed at normal pressure or under a reduced pressure atmosphere. When the drying is performed at normal pressure, the drying is preferably performed under an inert gas atmosphere such as nitrogen gas or argon gas or under an air atmosphere having a dew point of -20°C or less.

Secondary activation may be performed after the washing and drying. It is preferable that a reaction gas be fed such that the amount of the contact reaction gas per the primarily-activated activated carbon in the secondary activation is 5 to 30 mL/min/kg from the viewpoint of making it easy to increase the electrostatic capacitance or discharge capacity of a power storage device containing the activated carbon of the present invention and easy to decrease the resistance.

Regarding conditions, such as the activation temperature, the contact ratio, and the water vapor partial pressure, the secondary activation can be performed in the same condition ranges as those of the primary activation.

The secondary activation is preferably performed until the BET specific surface area of the secondarily-activated activated carbon obtained after the secondary activation reaches about 1150 to 2200 $m^2/g$ (preferably 1400 to 2200 $m^2/g$, more preferably 1600 to 2200 $m^2/g$).

After the secondary activation, tertiary activation may be further performed, and higher order activations may be further performed. In addition, washing or drying may be performed between activations, namely, the secondary activation and the subsequent activations. From the viewpoint of economic efficiency, it is preferable to perform up to secondary activation. Conditions of the tertiary activation and higher order activations may be appropriately adjusted according to the desired properties of the activated carbon.

It is preferable that the activated carbon obtained after the secondary activation or a higher activation be further washed in the same manner as after the primary activation to further remove the ash and the metal impurities contained in the activated carbon.

After the primary activation or the further activation, heat treatment is performed. By performing the heat treatment, the crystallinity is increased, so that the resistance is easily lowered, and the amount of impurities in the activated carbon is easily reduced.

The method of the heat treatment is not particularly limited, but the heat treatment can be performed in the same manner as the primary activation, and can be selected according to a desired contact ratio of the activated carbon after activation with a reaction gas to be described later.

From the viewpoint of making it easy to increase the electrostatic capacitance or the discharge capacity of a power storage device containing the activated carbon of the present invention and easy to decrease the resistance, it is preferable to use a mixed gas of an inert gas and water vapor in the heat treatment. The partial pressure of water vapor at that time is preferably 15% or less. When the partial pressure of water vapor is within the above range, the crystallinity increases, so that the resistance is likely to be low.

To make it easy to increase the electrostatic capacitance or discharge capacity of a power storage device containing the activated carbon of the present invention and easy to decrease the resistance, it is preferable to feed the mixed gas such that the amount of the contact reaction gas per the activated carbon after activation, which is determined by the following equation, is 0.1 to 5 mL/min/kg.

Amount of contact reaction gas per activated carbon after activation [mL/min/kg] = temperature-corrected amount of reaction gas [mL/min]/amount of activated carbon after activation [kg] × contact ratio [%]/100 [Math. 3]

Temperature-corrected amount of reaction gas [mL/min] = amount of reaction gas [mL/min] × (273 + activation temperature [°C])/273 [Math. 4]

When the amount of the contact reaction gas per the activated carbon after the activation is within the above range, pores having a size expressed by the adsorption amount of vitamin B12 are likely to develop, the electrostatic capacitance or discharge capacity of a power storage device containing the activated carbon of the present invention is likely to be high, and the resistance is likely to be low.

From the viewpoint of appropriately developing said pores, the contact ratio of the activated carbon after the activation with the reaction gas is preferably 20% or more. Incidentally, the contact ratio of the activated carbon after the activation with the reaction gas is 100% in the case of a vertical furnace because the reaction gas uniformly flows from the furnace bed to the upper portion, and can be determined by the ratio of the volume of the activated carbon after the activation to the volume of the furnace in the case of a horizontal furnace.

The heat treatment temperature is usually 600 to 1000°C, and preferably 700 to 900°C. The heat treatment time and the heating rate are not particularly limited, but the heat treatment time is preferably 0.5 to 24 hours, more preferably 1 to 12 hours, and the heating rate is preferably 10 to 60°C/min, more preferably 20 to 50°C/min from the viewpoint of reducing the load on reaction facilities and maintaining the structure of the activated carbon.

The activated carbon after the heat treatment may be pulverized. The pulverization method is not particularly limited, but a publicly-known pulverization method such as a bead mill, a ball mill, a hammer mill, a roll mill, a rod mill, or a jet mill, or a combination thereof may be employed. The average particle size of the activated carbon after the pulverization is not particularly limited, but is preferably 100 μm or less, more preferably 90 μm or less, and preferably 1 μm or more, more preferably 2 μm or more from the viewpoint of improving the electrode density and reducing the resistance The average particle size can be measured using, for example, a particle size/particle size distribution analyzer or the like.

The activated carbon obtained through the pulverization may be classified. For example, by removing particles having a particle size of 1 μm or less, activated carbon particles having a narrow particle size distribution width can be obtained. The classification method is not particularly limited, and examples thereof include classification using a sieve, wet classification, and dry classification. Examples of a wet classifier include classifiers using such principles as gravity classification, inertial classification, hydraulic classification, and centrifugal classification. Examples of a dry classifier include classifiers using such principles as sedimentation classification, mechanical classification, and centrifugal classification. From the viewpoint of economic efficiency, it is preferable to use a dry classifier.

The activated carbon of the present invention can be suitably used as an electrode material of various power storage devices such as an electric double layer capacitor, a lithium ion battery, and a lithium-sulfur battery. In particular, the activated carbon is suitable as an electrode material of an electric double layer capacitor, and by the use of the activated carbon of the present invention, an electric double layer capacitor capable of achieving both high electrostatic capacitance and low resistance can be obtained. Further, by use of the activated carbon of the present invention, it is possible to provide a power storage device superior in performance at a low temperature. Therefore, in one embodiment of the present invention, an electrode material containing the activated carbon of the present invention can be provided. In addition, it is possible to provide an electrode containing the electrode material and a power storage device including the electrode.

The electrode of the present invention is characterized by including the activated carbon of the present invention. The electrode of the present invention can be manufactured by, for example, a method in which an electrode material is prepared by kneading the activated carbon of the present invention as a raw material with components such as a conductivity imparting agent (also referred to as a conductive aid), a binder, and a solvent, followed by applying, drying, and the like of the kneaded product, a paste is prepared by adding a solvent to the electrode material, the paste is applied to a current collecting plate such as an aluminum foil, then the solvent is removed by drying, and the paste is put in a mold and press-molded.

As the conductivity imparting agent, for example, carbon black, acetylene black, Ketjen black, or the like can be used. As the binder, for example, fluorine-based polymer compounds such as polytetrafluoroethylene and polyvinylidene fluoride, carboxymethyl cellulose, styrene-butadiene rubber, petroleum pitch, phenol resin, and the like can be used. As the solvent, for example, water; alcohols such as methanol and ethanol; saturated hydrocarbons such as hexane and heptane; aromatic hydrocarbons such as toluene, xylene, and mesitylene; ketones such as acetone and ethyl methyl ketone; esters such as methyl acetate and ethyl acetate; amides such as N,N-dimethylformamide and N,N-diethylformamide; and cyclic amides such as N-methylpyrrolidone and N-ethylpyrrolidone can be used.

The power storage device of the present invention, particularly an electric double layer capacitor is characterized by including the electrode. Electric double layer capacitors generally have a structure in which electrodes, an electrolytic solution, and a separator are main components, and the separator is disposed between the electrodes paired. Examples of the electrolytic solution include an electrolytic solution in which an amidine salt is dissolved in an organic solvent such as propylene carbonate, ethylene carbonate, or methylethyl carbonate, an electrolytic solution in which a quaternary ammonium salt of perchloric acid is dissolved, an electrolytic solution in which a tetrafluoroborate salt or hexafluorophosphate salt of quaternary ammonium or an alkali metal such as lithium is dissolved, and an electrolytic solution in which a quaternary phosphonium salt is dissolved. Examples of the separator include nonwoven fabrics, cloths, and microporous films containing cellulose, glass fiber, or polyolefin such as polyethylene or polypropylene as a main component. The electric double layer capacitor can be manufactured, for example, by disposing these main components by a method conventionally common in the art.

## Examples

Hereinafter, the present invention will be described more specifically based on Examples and Comparative Examples, but the present invention is not limited to the following Examples. Physical property values in Examples and Comparative Examples were measured by the following methods.

### <BET specific surface area>

The activated carbon obtained in each of Examples and Comparative Examples was heated at 300°C for 3 hours under a nitrogen stream (nitrogen flow rate: 50 mL/min) using BELSORP-mini manufactured by MicrotracBEL Corp., and then a nitrogen adsorption/desorption isotherm of the activated carbon at 77 K was measured. The adsorption/desorption isotherm obtained was analyzed by a multipoint method with the BET equation, and the specific surface area was calculated from a straight line of an obtained curve in a region of relative pressure $P/P_0$ = 0.01 to 0.1.

### <Adsorption amount of vitamin B12>

#### [Concentration of vitamin B12]

The activated carbon obtained in each of Examples and Comparative Examples was pulverized, vacuum-dried at 120°C for 3 hours or more, and then allowed to cool to room temperature in a desiccator. To about 50 mg of the activated carbon obtained was added 100 mL of an aqueous solution of vitamin B12 ($C_{63}H_{88}CoN_{14}O_{14}P$, molecular weight: 1355.4) (hereinafter, sometimes referred to as "VB12") adjusted to 300 ppm, the mixture was stirred at 24°C (±1°C) for 2 hours or 24 hours, and a filtered filtrate was collected. For the 300 ppm aqueous vitamin B12 solution before adsorption used in an adsorption test and the vitamin B12 filtrate after adsorption treatment, the absorbance at 550 nm was measured, and the concentrations of the aqueous vitamin B12 solution before the adsorption and the vitamin B12 filtrate after the adsorption treatment were calculated on the basis of a calibration curve prepared in advance.

[Packing density]

The packing density of pulverized activated carbon was measured on the basis of the measurement method described in JIS K 1474:2014.

[Adsorption amount provided by contact with aqueous vitamin B12 solution for 24 hours]

On the basis of the vitamin B12 concentration and packing density obtained, the adsorption amount per 1 mL of the activated carbon provided by contact with an aqueous vitamin B12 solution for 24 hours was calculated by the following equation.

Adsorption amount (mg/mL) provided by contact with aqueous VB12 solution for 24 hours = {concentration (ppm) of VB12 before adsorption - concentration (ppm) of VB12 after contact with aqueous VB12 solution for 24 hours} × 0.1/mass (g) of activated carbon × packing density (g/mL) [Math. 5]

[Ratio of adsorption amount provided by contact with aqueous vitamin B12 solution for 2 hours to adsorption amount provided by contact with aqueous vitamin B12 solution for 24 hours]

The ratio of the adsorption amount provided by the contact with the aqueous vitamin B12 solution for 2 hours to the adsorption amount provided by the contact with the aqueous vitamin B12 solution for 24 hours was determined from the following equation. The adsorption amount provided by the contact with the aqueous vitamin B12 solution for 2 hours was calculated in the same manner as described above from the concentration ( ppm) of vitamin B12 after the contact for 2 hours.

Ratio (%) of adsorption amount provided by contact with aqueous VB12 solution for 2 hours to adsorption amount provided by contact with aqueous VB12 solution for 24 hours = adsorption amount (mg/mL) provided by contact with aqueous VB12 solution for 2 hours/adsorption amount (mg/mL) provided by contact with aqueous VB12 solution for 24 hours × 100 [Math. 6]

<Content of chlorine>

The activated carbon obtained in each of Examples and Comparative Examples was pulverized, vacuum-dried at 120°C for 3 hours or more, and then allowed to cool to room temperature in a desiccator. The activated carbon obtained was placed 15 $cm^3$ or more in a polyethylene container, the back of the container was pressed with a plankton net, the measurement surface was covered with a polypropylene film, and the container was placed in a sample holder for a top irradiation system. The measurement was performed using "Primus II" manufactured by Rigaku Corporation under a helium gas atmosphere at an output of 3 kW, a scan rate of 8 deg/min, and with an X-ray source of 30 kV and 100 mA. From the detected elements and their X-ray intensities, the chlorine content was calculated by Scan Quant X (SQX) analysis: the standardless Fundamental Parameter analysis of Rigaku Corporation.

<Ratio of D band peak to G band peak in Raman spectroscopy>

The activated carbon obtained in each of Examples and Comparative Examples was pulverized, vacuum-dried at 120°C for 3 hours or more, and then allowed to cool to room temperature in a desiccator. A Raman spectrum was measured using a light source having a laser wavelength of 532 nm using "XploRA PLUS" manufactured by HORIBA, Ltd. The test was performed on particles randomly sampled in each sample. The measurement conditions were a wavelength range of 500 to 2000 $cm^{-1}$, an exposure time of 10 seconds, and the number of integrations of 50 times, and an average value of 5 points in total was calculated as a measurement value. The D/G value was an intensity ratio ID/IG (D band peak intensity/G band peak intensity) of the peak of a D band in the vicinity of 1360 $cm^{-1}$ and the peak of a G band in the vicinity of 1580 $cm^{-1}$.

<Chloroform adsorption amount>

An arbitrary amount of pulverized activated carbon was charged into 100 mL of a chloroform solution adjusted to an initial concentration of about 0.100 mg/L, and then the mixture was shaken at about 25°C at a frequency of 160 times/min for 2 hours. Then, after leaving to stand in a thermostatic bath at 25°C for 1 hour, the equilibrium adsorption amount of chloroform was calculated.

Specifically, the adsorption amount A (mg/g) was determined by the following equation from the chloroform concentration Co (mg/L) of the blank to which no activated carbon was charged, the chloroform concentration C (mg/L) of the test water to which activated carbon was charged, and the mass W (mg) of the activated carbon charged. The chloroform concentration was determined by a headspace method using ECD gas chromatography.

$$A = (Co - C) \times 1000 \times 0.1/W$$

Further, a power approximate formula was calculated from the adsorption amounts A at three points having different test water concentrations determined, and the adsorption amount at a test water concentration of 0.01 mg/L was calculated as an equilibrium adsorption amount.

<Example 1>

1 kg of char (specific surface area: about 400 $m^2/g$) prepared using coconut shell of coconut produced in the Philippines as a raw material was charged into a fluidized activation furnace heated to 900°C, and propane combustion gas and water vapor (water vapor partial pressure: 35%) were introduced such that the amount thereof in total was 0.75 mL/min (the temperature-corrected amount of the reaction gas was 3.22 mL/min, the contact ratio of the char with the reaction gas was 100%, and the amount of the contact reaction gas per the char was 3.22 mL/min/kg), and primary activation was performed until the specific surface area reached 1550 $m^2/g$. Thereafter, the product was washed with hydrochloric acid (concentration: 0.5 N, diluent: ion-exchanged water) at a temperature of 70°C for 30 minutes, then thoroughly washed with ion-exchanged water, and then dried. This primarily-activated washed carbon was charged into a heat treatment furnace, and propane combustion gas and water vapor (water vapor partial pressure: 10%) were introduced such that the amount thereof in total was 0.70 mL/min (the temperature-corrected amount of the reaction gas was 2.62 mL/min, the contact ratio of the primarily-activated activated carbon with the reaction gas was 100%, and the amount of the contact reaction gas per the primarily-activated activated carbon was 2.62 mL/min/kg), and heat treatment was performed at 750°C such that a specific surface area of 1641 $m^2/g$ was attained, and thus activated carbon was obtained.

The temperature-corrected amount of the reaction gas, the amount of the contact reaction gas per char, and the amount of the contact reaction gas per the activated carbon activated were calculated according to the following equations.

Temperature-corrected amount of reaction gas [mL/min] = amount of reaction gas [mL/min] × (273 + activation temperature [°C])/273 [Math. 7]

Amount of contact reaction gas per char [mL/min/kg] = temperature-corrected amount of reaction gas [mL/min]/mass of char [kg] × contact ratio [%]/100 [Math. 8]

Amount of contact reaction gas per activated carbon activated [mL/min/kg] = temperature-corrected amount of reaction gas [mL/min]/amount of activated carbon activated [kg] × contact ratio [%]/100 [Math. 9]

<Example 2>

Activated carbon was obtained in the same manner as in Example 1 except that propane combustion gas and water vapor were introduced at a rate of 1.05 mL/min in total (the temperature-corrected amount of the reaction gas was 4.51 mL/min, the contact ratio of the char with the reaction gas was 100%, and the amount of the contact reaction gas per the char was 4.51 mL/min/kg), and primary activation was performed until the specific surface area reached 1648 $m^2/g$, and propane combustion gas and water vapor were introduced at a rate of 0.55 mL/min in total (the temperature-corrected amount of the reaction gas: 2.06 mL/min, the contact ratio of the activated carbon with the reaction gas: 100%, the amount of the contact reaction gas per the activated carbon: 2.06 mL/min/kg), and heat treatment was performed at 750°C such that the specific surface area reached 1737 $m^2/g$.

<Example 3>

Activated carbon was obtained in the same manner as in Example 1 except that propane combustion gas and water vapor were introduced at a rate of 1.00 mL/min in total (the temperature-corrected amount of the reaction gas was 4.30 mL/min, the contact ratio of the char with the reaction gas was 100%, and the amount of the contact reaction gas per the char was 4.30 mL/min/kg), and primary activation was performed until the specific surface area reached 1788 $m^2/g$, and propane combustion gas and water vapor were introduced at a rate of 0.60 mL/min in total (the temperature-corrected amount of the reaction gas: 2.25 mL/min, the contact ratio of the activated carbon with the reaction gas: 100%, the amount of the contact reaction gas per the activated carbon: 2.25 mL/min/kg), and heat treatment was performed at 750°C such that the specific surface area reached 1858 $m^2/g$.

<Example 4>

Activated carbon was obtained in the same manner as in Example 1 except that propane combustion gas and water vapor were introduced at a rate of 0.95 mL/min in total (the temperature-corrected amount of the reaction gas was 4.08 mL/min, the contact ratio of the char with the reaction gas was 100%, and the amount of the contact reaction gas per the char was 4.08 mL/min/kg), and primary activation was performed until the specific surface area reached 1862 $m^2/g$, and propane combustion gas and water vapor were introduced at a rate of 0.55 mL/min in total (the temperature-corrected amount of the reaction gas: 2.06 mL/min, the contact ratio of the activated carbon with the reaction gas: 100%, the amount of the contact reaction gas per the activated carbon: 2.06 mL/min/kg), and heat treatment was performed at 750°C such that the specific surface area reached 1940 $m^2/g$.

<Example 5>

1 kg of char (specific surface area: about 400 $m^2/g$) prepared using coconut shell of coconut produced in the Philippines as a raw material was charged into a rotary kiln heated to 900°C, and propane combustion gas and water vapor (water vapor partial pressure: 35%) were introduced such that the amount thereof in total was 0.50 mL/min (the temperature-corrected amount of the reaction gas was 2.15 mL/min, the contact ratio of the char with the reaction gas was 15%, and the amount of contact reaction gas per char was 0.32 mL/min/kg), and primary activation was performed until the specific surface area reached 1676 $m^2/g$. The contact ratio with the reaction gas was calculated from the ratio of the volume of the char to the volume of the furnace. Thereafter, the product was washed with hydrochloric acid (concentration: 0.5 N, diluent: ion-exchanged water) at a temperature of 70°C for 30 minutes, then thoroughly washed with ion-exchanged water, and then dried. The primarily-activated washed carbon was charged into a fluidized activation furnace heated to 950°C, and propane combustion gas and water vapor (water vapor partial pressure: 30%) were introduced such that the amount thereof in total was 2.50 mL/min (the temperature-corrected amount of the reaction gas was 11.20 mL/min, the contact ratio of the char with the reaction gas was 100%, and the amount of the contact reaction gas per the char was 11.20 mL/min/kg), and secondary activation was performed until the specific surface area reached 2079 $m^2/g$. Thereafter, the product was washed with hydrochloric acid (concentration: 0.5 N, diluent: ion-exchanged water) at a temperature of 70°C for 30 minutes, then thoroughly washed with ion-exchanged water, and then dried. This secondarily-activated washed carbon was charged into a heat treatment furnace, and propane combustion gas and water vapor (water vapor partial pressure: 15%) were introduced such that the amount thereof in total was 0.75 mL/min (the temperature-corrected amount of the reaction gas was 2.81 mL/min, the contact ratio of the activated carbon with the reaction gas was 100%, and the amount of the contact reaction gas per the activated carbon was 2.81 mL/min/kg), and heat treatment was performed at 750°C until the specific surface area reached 2108 $m^2/g$, and thus activated carbon was obtained.

<Example 6>

Activated carbon was obtained in the same manner as in Example 1 except that propane combustion gas and water vapor were introduced at a rate of 0.95 mL/min in total (the temperature-corrected amount of the reaction gas was 4.08 mL/min, the contact ratio of the char with the reaction gas was 100%, and the amount of the contact reaction gas per the char was 4.08 mL/min/kg), and primary activation was performed until the specific surface area reached 1407 $m^2/g$, and propane combustion gas and water vapor were introduced at a rate of 0.55 mL/min in total (the temperature-corrected amount of the reaction gas: 2.06 mL/min, the contact ratio of the activated carbon with the reaction gas: 100%, the amount of the contact reaction gas per the activated carbon: 2.06 mL/min/kg), and heat treatment was performed at 750°C such that the specific surface area reached 1482 $m^2/g$.

<Example 7>

Activated carbon was obtained in the same manner as in Example 1 except that propane combustion gas and water vapor were introduced at a rate of 1.00 mL/min in total (the temperature-corrected amount of the reaction gas was 4.30 mL/min, the contact ratio of the char with the reaction gas was 100%, and the amount of the contact reaction gas per the char was 4.30 mL/min/kg), and primary activation was performed until the specific surface area reached 1250 $m^2$/g, and propane combustion gas and water vapor were introduced at a rate of 0.60 mL/min in total (the temperature-corrected amount of the reaction gas: 2.25 mL/min, the contact ratio of the activated carbon with the reaction gas: 100%, the amount of the contact reaction gas per the activated carbon: 2.25 mL/min/kg), and heat treatment was performed at 750°C such that the specific surface area reached 1320 $m^2$/g.

<Example 8>

Activated carbon was obtained in the same manner as in Example 1 except that propane combustion gas and water vapor were introduced at a rate of 0.95 mL/min in total (the temperature-corrected amount of the reaction gas was 4.08 mL/min, the contact ratio of the char with the reaction gas was 100%, and the amount of the contact reaction gas per the char was 4.08 mL/min/kg), and primary activation was performed until the specific surface area reached 1208 $m^2$/g, and propane combustion gas and water vapor were introduced at a rate of 0.55 mL/min in total (the temperature-corrected amount of the reaction gas: 2.06 mL/min, the contact ratio of the activated carbon with the reaction gas: 100%, the amount of the contact reaction gas per the activated carbon: 2.06 mL/min/kg), and heat treatment was performed at 750°C such that the specific surface area reached 1283 $m^2$/g.

<Comparative Example 1>

100 g of sawdust of pine (water content: 48% by mass) and 97.8 g of a 85% by mass aqueous phosphoric acid solution were mixed (dry solid mass of phosphoric acid/dry solid mass of sawdust = 1.6). The mixture was heated with stirring in a circulation dryer heated to a temperature of 175°C. The resulting mixture was charged into a rotary kiln heated to 300°C and held under air for 3 hours for oxidation. Primary activation was performed on the oxidation-treated product at 500°C under nitrogen until a specific surface area of 1097 $m^2$/g was attained. Thereafter, the product was thoroughly washed with ion-exchanged water and dried. This primarily-activated washed carbon was charged into a heat treatment furnace, and propane combustion gas and water vapor (water vapor partial pressure: 10%) were introduced such that the amount thereof in total was 0.35 mL/min (the temperature-corrected amount of the reaction gas was 1.31 mL/min, the contact ratio of the activated carbon with the reaction gas was 100%, and the amount of the contact reaction gas per the activated carbon was 1.31 mL/min/kg), and heat treatment was performed at 750°C such that a specific surface area of 1146 $m^2$/g was attained, and thus activated carbon was obtained.

<Comparative Example 2>

1 kg of char (specific surface area: about 400 $m^2$/g) prepared using coconut shell of coconut produced in the Philippines as a raw material was charged into a fluidized activation furnace heated to 900°C, and propane combustion gas and water vapor (water vapor partial pressure: 35%) were introduced such that the amount thereof in total was 0.65 mL/min (the temperature-corrected amount of the reaction gas was 2.79 mL/min, the contact ratio of the char with the reaction gas was 100%, and the amount of the contact reaction gas per the char was 2.79 mL/min/kg), and primary activation was performed until the specific surface area reached 1621 $m^2$/g. Thereafter, the product was washed at a temperature of 70°C for 30 minutes using hydrochloric acid (concentration: 0.5 N, diluent: ion-exchanged water), and then thoroughly washed with ion-exchanged water and dried, affording activated carbon.

<Comparative Example 3>

1 kg of char (specific surface area: about 400 $m^2$/g) prepared using coconut shell of coconut produced in the Philippines as a raw material was charged into a fluidized activation furnace heated to 900°C, and propane combustion gas and water vapor (water vapor partial pressure: 15%) were introduced such that the amount thereof in total was 0.25 mL/min (the temperature-corrected amount of the reaction gas was 1.07 mL/min, the contact ratio of the char with the reaction gas was 15%, and the amount of the contact reaction gas per the char was 0.16 mL/min/kg), and primary activation was performed until the specific surface area reached 1889 $m^2$/g. Thereafter, the product was washed at a temperature of 70°C for 30 minutes using hydrochloric acid (concentration: 0.5 N, diluent: ion-exchanged water), and then thoroughly washed with ion-exchanged water and dried, affording activated carbon.

<Comparative Example 4>

1 kg of char (specific surface area: about 400 $m^2/g$) prepared using coconut shell of coconut produced in the Philippines as a raw material was charged into a rotary kiln heated to 900°C, and propane combustion gas and water vapor (water vapor partial pressure: 25%) were introduced such that the amount thereof in total was 0.50 mL/min (the temperature-corrected amount of the reaction gas was 2.15 mL/min, the contact ratio of the char with the reaction gas was 15%, and the amount of the contact reaction gas per the char was 0.32 mL/min/kg), and primary activation was performed until the specific surface area reached 1865 $m^2/g$. The contact ratio with the reaction gas was calculated from the ratio of the volume of the char to the volume of the furnace. Thereafter, the product was washed with hydrochloric acid (concentration: 0.5 N, diluent: ion-exchanged water) at a temperature of 70°C for 30 minutes, then thoroughly washed with ion-exchanged water, and then dried. The primarily-activated washed carbon was charged into a fluidized activation furnace heated to 950°C, and propane combustion gas and water vapor (water vapor partial pressure: 15%) were introduced such that the amount thereof in total was 1.85 mL/min (the temperature-corrected amount of the reaction gas was 8.29 mL/min, the contact ratio of the char with the reaction gas was 100%, and the amount of the contact reaction gas per the char was 8.29 mL/min/kg), and secondary activation was performed until the specific surface area reached 2195 $m^2/g$. Thereafter, the product was washed with hydrochloric acid (concentration: 0.5 N, diluent: ion-exchanged water) at a temperature of 70°C for 30 minutes, then thoroughly washed with ion-exchanged water, and then dried. This secondarily-activated washed carbon was charged into a heat treatment furnace, and propane combustion gas and water vapor (water vapor partial pressure: 10%) were introduced such that the amount thereof in total was 0.45 mL/min (the temperature-corrected amount of the reaction gas was 1.69 mL/min, the contact ratio of the activated carbon with the reaction gas was 100%, and the amount of the contact reaction gas per the activated carbon was 1.69 mL/min/kg), and heat treatment was performed at 750°C until the specific surface area reached 2221 $m^2/g$, and thus activated carbon was obtained.

<Comparative Example 5>

Activated carbon was obtained in the same manner as in Comparative Example 2 except that primary activation was performed on an oxidation-treated product at 500°C under nitrogen until the specific surface area reached 1548 $m^2/g$, and propane combustion gas and water vapor (water vapor partial pressure: 10%) were introduced such that the amount thereof in total was 0.5 mL/min (the temperature-corrected amount of the reaction gas: 1.87 mL/min, the contact ratio of the activated carbon with the reaction gas: 100%, the amount of the contact reaction gas per the activated carbon: 1.87 mL/min/kg), and heat treatment was performed at 750°C such that a specific surface area of 1601 $m^2/g$ was attained.

<Comparative Example 6>

1 kg of char (specific surface area: about 400 $m^2/g$) prepared using coconut shell of coconut produced in the Philippines as a raw material was charged into a fluidized activation furnace heated to 900°C, and introduced such that the amount of propane combustion gas + water vapor (water vapor partial pressure: 25%) was 0.60 mL/min (the temperature-corrected amount of the reaction gas was 2.58 mL/min, the contact ratio of the char with the reaction gas was 100%, and the amount of contact reaction gas per char was 2.58 mL/min/kg), and primary activation was performed until the specific surface area reached 1314 $m^2/g$. Thereafter, the product was washed with hydrochloric acid (concentration: 0.5 N, diluent: ion-exchanged water) at a temperature of 70°C for 30 minutes, then thoroughly washed with ion-exchanged water, and then dried. This primarily-activated washed carbon was charged into a heat treatment furnace, and propane combustion gas and water vapor (water vapor partial pressure: 10%) were introduced such that the amount thereof in total was 0.30 mL/min (the temperature-corrected amount of the reaction gas was 1.12 mL/min, the contact ratio of the activated carbon with the reaction gas was 100%, and the amount of the contact reaction gas per the activated carbon was 1.12 mL/min/kg), and heat treatment was performed at 750°C such that a specific surface area of 1353 $m^2/g$ was attained, and thus activated carbon was obtained.

Physical properties of the activated carbons obtained in Examples and Comparative Examples are shown in Table 1.

[Table 1]

| | Specific surface area | Packing density | Adsorption amount of vitamin B12 (24hr) | Adsorption amount of vitamin B12 (2hr) | Adsorption amount of vitamin B12 (24hr) | Adsorption amount of vitamin B12 (2hr) | Adsorption amount of vitamin B12 (24hr)/specific surface area | Chlorine content | Raman D/G | Ratio of adsorption amounts of vitamin B12 2hr/24hr | Adsorption amount of chloroform |
|---|---|---|---|---|---|---|---|---|---|---|---|
| | $m^2/g$ | g/mL | mg/g | mg/g | mg/mL | mg/mL | (mg/mL) /($m^2/g$) | ppm | - | % | mg/g |
| Example 1 | 1641 | 0.302 | 46.7 | 36.9 | 14.1 | 11.1 | 0.00859 | 33 | 1.18 | 79 | 0.47 |
| Example 2 | 1737 | 0.279 | 94.2 | 70.1 | 26.3 | 19.6 | 0.01514 | 5 | 1.18 | 75 | 0.53 |
| Example 3 | 1858 | 0.255 | 78.9 | 62.2 | 20.1 | 15.9 | 0.01082 | 3 | 1.20 | 79 | 0.54 |
| Example 4 | 1940 | 0.239 | 99.6 | 74.9 | 23.8 | 17.9 | 0.01227 | 0 | 1.21 | 75 | 0.43 |
| Example 5 | 2108 | 0.205 | 240.7 | 160.0 | 49.3 | 33.8 | 0.02339 | 10 | 1.30 | 66 | 0.36 |
| Example 6 | 1482 | 0.335 | 39.5 | 33.7 | 13.2 | 11.3 | 0.00891 | 0 | 1.19 | 85 | 0.71 |
| Example 7 | 1320 | 0.346 | 32.1 | 28.1 | 11.1 | 9.7 | 0.00841 | 0 | 1.19 | 88 | 0.91 |
| Example 8 | 1283 | 0.362 | 30.3 | 26.9 | 11.0 | 9.7 | 0.00857 | 0 | 1.20 | 89 | 1.03 |
| Comparative Example 1 | 1146 | 0.335 | 114.4 | 64.8 | 38.3 | 21.7 | 0.03342 | 15 | 0.73 | 57 | 0.48 |
| Comparative Example 2 | 1621 | 0.298 | 168.0 | 139.2 | 50.1 | 41.5 | 0.03091 | 2960 | 1.14 | 83 | 0.48 |
| Comparative Example 3 | 1889 | 0.275 | 56.0 | 38.0 | 15.4 | 10.5 | 0.00815 | 4520 | 1.25 | 68 | 0.53 |
| Comparative Example 4 | 2229 | 0.191 | 289.4 | 164.4 | 55.2 | 31.3 | 0.02476 | 103 | 1.32 | 57 | 0.29 |
| Comparative Example 5 | 1601 | 0.218 | 409.1 | 371.0 | 89.2 | 80.9 | 0.05572 | 5 | 0.75 | 91 | 0.24 |
| Comparative Example 6 | 1353 | 0.355 | 28.5 | 25.7 | 10.1 | 9.1 | 0.00746 | 3 | 1.18 | 90 | 0.86 |

<Preparation of test electrode>

The activated carbon obtained in each of Examples and Comparative Examples was pulverized to have an average particle size of 6 μm. The pulverized activated carbon, a conductive aid, and a binder were previously dried under reduced pressure in an atmosphere at 120°C and reduced pressure (0.1 KPa or less) for 16 hours or more, and then used.

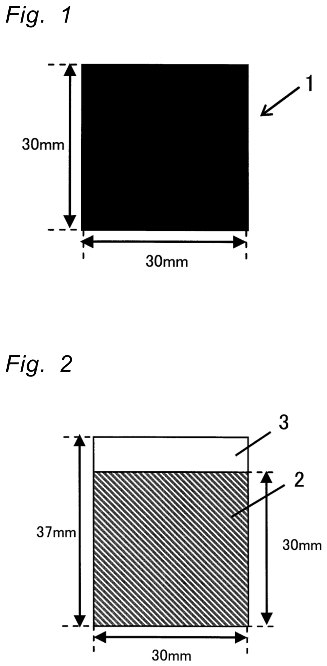

The activated carbon, the conductive aid and the binder were weighed such that the ratio of (mass of activated carbon) : (mass of conductive aid) : (mass of binder) was 81 : 9 : 10, and then kneaded. A conductive carbon black "DENKA BLACK Granular" manufactured by Denka Co., Ltd. was used as the conductive aid, and a polytetrafluoroethylene "6J" manufactured by Du Pont-Mitsui Fluorochemicals Co., Ltd. was used as the binder. After the kneading, to further homogenize the mixture, the mixture was cut into flakes of 1 mm square or smaller in size, and a pressure of 400 kg/cm$^2$ was applied using a coin molding machine, affording a coin-shaped secondary molded product. The resulting secondary molded product was molded into a sheet shape having a thickness of 160 μm ± 5% with a roll press machine, and then cut into a prescribed size (30 mm × 30 mm), and thus an electrode composition 1 as illustrated in Fig. 1 was prepared. Then, the electrode composition 1 obtained was dried at 120°C under a reduced pressure atmosphere for 16 hours or more, and then the mass, the sheet thickness and the dimensions were measured and used for the following measurement.

<Production of electrode cell to be measured>

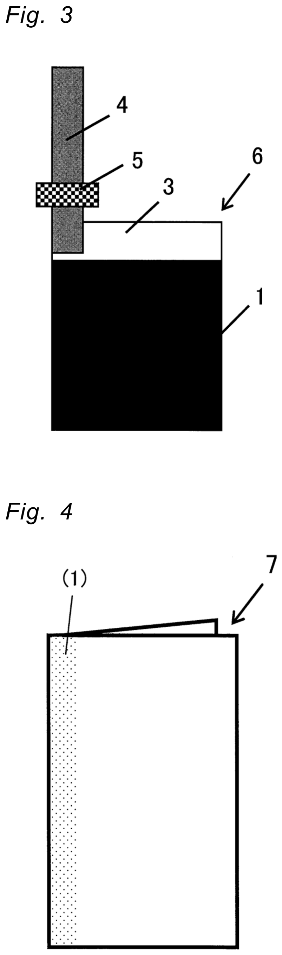

As illustrated in Fig. 2, a conductive adhesive 2 "HITASOL GA-715" manufactured by Hitachi Chemical Co., Ltd. was applied to have a thickness of 100 μm onto an etched aluminum foil 3 manufactured by Hohsen Corp. Then, as illustrated in Fig. 3, the etched aluminum foil 3 coated with the conductive adhesive 2 was bonded to the sheet-shaped electrode composition 1 previously cut. Then, an aluminum tab 4 with a sealant 5 manufactured by Hohsen Corp. was welded to the etched aluminum foil 3 using an ultrasonic welding machine. After the welding, the resultant was vacuum dried at 120°C, affording a polarizable electrode 6 including an aluminum current collector.

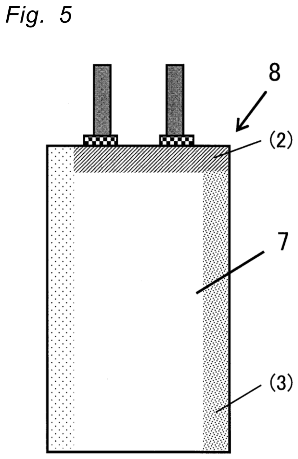

As illustrated in Fig. 4, an aluminum-laminated resin sheet manufactured by Hohsen Corp. was cut into a rectangular shape (200 mm in length × 60 mm in width) and folded in half, and the resultant was thermocompression-bonded along a single side ((1) in Fig. 4), and thus a bag-shaped exterior sheet 7 with two sides remaining open was prepared. A laminate in which two pieces of the aforementioned polarizable electrode 6 were stacked with interposition of a cellulose separator "TF-40" (not shown) manufactured by Nippon Kodoshi Corporation was prepared. The laminate was inserted into the exterior sheet 7, and one side ((2) in Fig. 5) in contact with the tab 4 was thermocompression-bonded to fix the polarizable electrode 6. Then, after vacuum drying at 120°C under a reduced pressure atmosphere for 16 hours or more, an electrolytic solution was injected into the exterior sheet in a dry box containing an argon atmosphere (dew point: -90°C or less). As the electrolytic solution, an acetonitrile solution containing 1.0 mol/L of tetraethylammonium tetrafluoroborate manufactured by Kishida Chemical Co., Ltd. was used. After impregnating the laminate with the electrolytic solution in the exterior sheet 7, the remaining one side of the exterior sheet 7 ((3) in Fig. 5) was thermocompression-bonded, and thus an electric double layer capacitor 8 illustrated in Fig. 5 was prepared.

<Measurement of electrostatic capacitance>

Using "CAPACITOR TESTER PFX2411" manufactured by Kikusui Electronics Corp., the thus obtained electric double layer capacitor 8 was charged with a constant current of 50 mA per electrode surface area at -30°C until the voltage reached 3.0 V. The electric double layer capacitor 8 was further subjected to auxiliary charging under a constant voltage of 3.0 V for 30 minutes and, after the completion thereof, the electric double layer capacitor 8 was discharged at 25 mA. The discharge curve data obtained was calculated by an energy conversion method and used as the electrostatic capacitance (F). Specifically, after the charging, discharging was performed until the voltage was reduced to zero, and the electrostatic capacitance (F) was calculated from the discharged energy at this discharging. Then, the thus obtained electrostatic capacitance was divided by the electrode volume to determine the electrostatic capacitance (F/cc).

<Resistance measurement>

Resistance measurement was performed using an electrochemical measurement apparatus (VMP3 manufactured by BioLogic) at -30°C by a constant voltage AC impedance measurement method with an amplitude width of 20 mV centered at 0 V, and at a frequency of 4 mHz to 1 MHz. As a result, a Cole-Cole plot showing a complex impedance relationship in which the real part was taken on the horizontal axis and the imaginary part was taken on the vertical axis was obtained. From this plot, the electrode interface resistance (the contact point with the real axis of a semicircle, the diameter of an arc) and the electrode diffusion resistance (the resistance value obtained by removing the interface resistance from the contact of the tangent of the low frequency-side curve with the real axis) were determined except for the resistance of the cable and the like.

The results of the evaluations are shown in Table 2.

[Table 2]

| | Electrode interface resistance | Electrode diffusion resistance | Electrostatic capacitance per volume |
|---|---|---|---|
| | Ω | Ω | F/cc |
| Example 1 | 0.019 | 0.43 | 15.4 |
| Example 2 | 0.020 | 0.47 | 14.8 |
| Example 3 | 0.013 | 0.35 | 14.6 |
| Example 4 | 0.007 | 0.34 | 14.4 |
| Example 5 | 0.005 | 0.33 | 13.5 |
| Example 6 | 0.020 | 0.43 | 16.7 |
| Example 7 | 0.020 | 0.44 | 16.3 |
| Example 8 | 0.020 | 0.48 | 15.9 |
| Comparative Example 1 | 0.148 | 11.66 | 12.1 |
| Comparative Example 2 | 0.021 | 0.49 | 15.1 |
| Comparative Example 3 | 0.031 | 0.51 | 14.1 |
| Comparative Example 4 | 0.004 | 0.31 | 12.2 |
| Comparative Example 5 | 0.062 | 12.45 | 11.0 |
| Comparative Example 6 | 0.047 | 0.43 | 16.2 |

It has been confirmed that the electric double layer capacitors including the electrodes containing the activated carbons obtained in Examples 1 to 8 had low resistance and high electrostatic capacitance. In contrast, in the electric double layer capacitors including the electrodes containing the activated carbons obtained in Comparative Examples 1 to 6, at least one of resistance and electrostatic capacitance was insufficient. Therefore, it has been found that the activated carbon of the present invention is useful for improving the performance of power storage devices.

REFERENCE SIGNS LIST

1 Electrode composition
2 Conductive adhesive
3 Etched aluminum foil
4 Tab
5 Sealant
6 Polarizable electrode
7 Bag-shaped exterior sheet
8 Electric double layer capacitor
(1) Thermocompression bonded side
(2) Side in contact with tab
(3) Remaining side of bag-shaped exterior sheet

## Claims

1. Activated carbon having a specific surface area calculated by a BET method from a nitrogen adsorption/desorption isotherm of 1150 $m^2$/g to 2200 $m^2$/g, an adsorption amount of vitamin B12 when the activated carbon is brought into contact with a 300 ppm aqueous vitamin B12 solution for 24 hours of 10.2 mg/mL to 50 mg/mL, and a content of chlorine of 2500 ppm or less.

2. The activated carbon according to claim 1, wherein a value of D/G, which is an intensity ratio of a D band peak in the vicinity of 1360 $cm^{-1}$ to a G band peak in the vicinity of 1580 $cm^{-1}$ in Raman spectroscopic analysis, is 1.15 to 1.40.

**3.** The activated carbon according to claim 1 or 2, wherein a ratio of an adsorption amount provided by contact with a 300 ppm aqueous vitamin B12 solution for 2 hours to an adsorption amount provided by contact with the aqueous solution for 24 hours is 58% or more.

**4.** The activated carbon according to claim 1 or 2, wherein a ratio of an adsorption amount of vitamin B12 when the activated carbon is brought into contact with a 300 ppm aqueous vitamin B12 solution for 24 hours to a specific surface area calculated by a BET method from a nitrogen adsorption/desorption isotherm is 0.00810 [(mg/mL)/($m^2$/g)] to 0.02470 [(mg/mL)/($m^2$/g)].

**5.** An electrode material comprising the activated carbon according to claim 1 or 2.

**6.** An electrode comprising the electrode material according to claim 5.

**7.** A power storage device comprising the electrode according to claim 6.

*Fig. 1*

30mm
30mm
1

*Fig. 2*

3
2
37mm
30mm
30mm

*Fig. 3*

4
5
6
3
1

*Fig. 4*

(1)
7

*Fig. 5*

8
(2)
7
(3)

**INTERNATIONAL SEARCH REPORT**

International application No.
**PCT/JP2024/021177**

**A. CLASSIFICATION OF SUBJECT MATTER**

***C01B 32/30***(2017.01)i; ***C01B 32/318***(2017.01)i; ***C01B 32/354***(2017.01)i; ***H01G 11/42***(2013.01)i; ***H01M 4/36***(2006.01)i; ***H01M 4/62***(2006.01)i; ***H01M 4/86***(2006.01)i
FI: C01B32/30; C01B32/318; C01B32/354; H01G11/42; H01M4/36 A; H01M4/62 Z; H01M4/86 B

According to International Patent Classification (IPC) or to both national classification and IPC

**B. FIELDS SEARCHED**

Minimum documentation searched (classification system followed by classification symbols)

C01B32/30; C01B32/318; C01B32/354; H01G11/42; H01M4/36; H01M4/62; H01M4/86

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 6829796 B1 (KURARAY CO., LTD.) 10 February 2021 (2021-02-10) claims, examples 2, 4-6, 8, comparative examples 3, 6, 11, tables 1-2 | 1-7 |
| Y | JP 2017-009501 A (CATALER CORP.) 12 January 2017 (2017-01-12) paragraphs [0001]-[0004], [0028], [0036] | 1-7 |
| Y | JP 2010-168238 A (KANSAI COKE & CHEM CO., LTD.) 05 August 2010 (2010-08-05) paragraphs [0001]-[0008], table 1 | 1-7 |
| A | JP 7060772 B1 (KURARAY CO., LTD.) 26 April 2022 (2022-04-26) entire text | 1-7 |
| A | JP 2003-290654 A (KURARAY CO., LTD.) 14 October 2003 (2003-10-14) entire text | 1-7 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 August 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (July 2022)

**INTERNATIONAL SEARCH REPORT**
**Information on patent family members**

International application No.
**PCT/JP2024/021177**

| Patent document cited in search report | Publication date (day/month/year) | Patent family member(s) | Publication date (day/month/year) |
|---|---|---|---|
| JP 6829796 B1 | 10 February 2021 | US 2022/0242737 A1<br>claims, examples 2, 4-6, 8, comparative examples 3, 6, 11, tables 1-2<br>WO 2020/218370 A1<br>KR 10-2020-0125933 A<br>CN 113727943 A<br>TW 202106378 A | |
| JP 2017-009501 A | 12 January 2017 | JP 5908148 B1 | |
| JP 2010-168238 A | 05 August 2010 | (Family: none) | |
| JP 7060772 B1 | 26 April 2022 | US 2023/0390731 A1<br>entire text<br>JP 2022-93398 A<br>WO 2022/085550 A1<br>EP 4215483 A1<br>TW 202222705 A<br>CN 116529207 A<br>KR 10-2023-0091907 A | |
| JP 2003-290654 A | 14 October 2003 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013118191 A
- WO 2015146459 A
- JP 2012092013 A